(19) Europäisches Patentamt / European Patent Office / Office européen des brevets

(11) **EP 2 136 198 B1**

(12) **EUROPEAN PATENT SPECIFICATION**

(45) Date of publication and mention
of the grant of the patent:
**25.05.2016 Bulletin 2016/21**

(51) Int Cl.:
*G01N 21/21* (2006.01)    *B82Y 20/00* (2011.01)
*G02B 3/00* (2006.01)    *G02B 5/30* (2006.01)
*G02B 6/12* (2006.01)    *G02B 6/126* (2006.01)
*H04N 5/225* (2006.01)    *G02B 6/122* (2006.01)
*G06K 9/00* (2006.01)    *G08G 1/00* (2006.01)
*G03B 11/00* (2006.01)    *H04N 9/097* (2006.01)
*G08G 1/16* (2006.01)

(21) Application number: **09251564.2**

(22) Date of filing: **16.06.2009**

(54) **Image pickup and method of detecting road status.**

Bilderfassung und Verfahren zum Erkennen des Straßenzustands

Capture d'image et procédé de détection d'état de la route

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **18.06.2008 JP 2008158594
16.01.2009 JP 2009007274**

(43) Date of publication of application:
**23.12.2009 Bulletin 2009/52**

(73) Proprietor: **Ricoh Company, Ltd.
Tokyo 143-8555 (JP)**

(72) Inventor: **Hideaki, Hirai
Tokyo 143-8555 (JP)**

(74) Representative: **Forsythe, Dominic et al
J A Kemp
14 South Square
Gray's Inn
London WC1R 5JJ (GB)**

(56) References cited:
**EP-A- 0 558 927    EP-A- 1 865 713
WO-A-2007/036695    JP-A- 5 264 441
JP-A- H1 139 596    JP-A- 55 156 841
JP-A- 58 158 540    JP-A- 2005 303 694
JP-A- 2005 308 612    US-A- 5 074 649
US-A- 5 557 261**

## Description

The present invention relates to an image pickup to detect the status of the surface of a road (wet or dry), and information on a lane, a sign, etc. written on the road, and a defect of the surface of the road.

To detect (discriminate) the status of a road (wet or dry), there is a wet road status detection device which detects a road status from the degree of a polarization ratio of a vertical polarization image to a horizontal polarization image shot (taken) by an image pickup arranged to have Brewster angle of water to a road. The image pickup includes straight line polarizer provided on the entire surface of the image pickup device. The straight line polarizer is rotated by a motor to switch the polarization plane from the vertical direction to the horizontal direction or vice versa when shooting an image of a road surface and then the polarization ratio of the vertical polarization image to the horizontal polarization image is calculated.

Since the wet road status detection device rotates the polarizer to rotate the polarization plane in the vertical direction and the horizontal direction when shooting an image of a road surface, the wet road status detection device is not suitable when the wet road status detection device is not attached to a fixed place but a vehicle such as an auto traveling a road. This is because the vertical polarization image and the horizontal polarization image are shot at totally different places due to the time lag created by the rotation of the polarizer.

In addition, since a motor and a driving force transmission mechanism are required, the wet road status detection device is inevitably large in size. On the other hand, when such a wet road status detection device is installed on a car, building the device in a rear view mirror or attaching it on the rear side thereof is preferable. Thus, a large-sized device such as the wet road status detection device is not suitable for a small object such as a rear view mirror.

EP 0 558 927 A1 discloses a method and device for the non-contact measurement of the ice-thawing salt content in a water layer on a road surface by measuring reflected electromagnetic radiation. According to a disclosed embodiment, light in the visible or infrared spectral region is directed at the region of the road surface covered with the water layer to be investigated, the intensities of at least two plane-polarized light components reflected from the water layer to be investigated are measured and these measurements are used to determine the salt content of the water layer.

JP 55 156841 A discloses a system for detecting the road surface state in a running car based on detecting the ratio between the vertical polarization and the horizontal polarization of reflected light. A polarizer is provided that can be turned to extract, for example, the horizontal polarization first and then the vertical polarization afterwards. Alternatively, separate polarizers for simultaneously detecting the horizontal and vertical polarizations may be provided.

JP 58 158540 A discloses a system for detecting road surface conditions. A light emitting device directs onto a road surface a light that is not polarized and the light reflected from the road surface is received in an image dividing lens of a light receiver. This light is divided for a light polarizer that detects a horizontal polarization component and a light polarizer that detects a vertical polarization component.

US-A-5 557 261 discloses an ice monitoring and detection system for determining the presence and thickness of ice on a surface. The system includes an imaging device which includes at least one lens for providing image signals of the surface. The imaging device is operable in a predetermined portion of the electromagnetic spectrum. Image signals from the surface are polarized into discreet polarization changes responsive to the camera receiving image signals proportional to amplitude modulated signals generated by the presence of ice. A processor is provided for converting the modulated signals into discrete polarization changes and for obtaining the difference between the discrete polarization changes which is proportional to the amount of ice on the surface. An indication device provides an output corresponding to the difference between the discrete polarization changes. The difference is indicative of the presence and amount of ice on the surface.

Because of these reasons, the present inventor recognizes that a need exists for a small-sized image pickup having a simple structure easily attachable to a vehicle such as an auto and capable of detecting the status of a road when the vehicle is traveling the road and a method of detecting the road status using the small-sized image pickup.

Accordingly, an object of the present invention is to provide a small-sized image pickup having a simple structure easily attachable to a vehicle such as an auto and capable of detecting the status of a road when the vehicle travels the road and a method of discriminating the road status using the small-sized image pickup.

According to an aspect of the invention, there is provided an image pickup according to claim 1.

It is preferred that the image pickup unit further includes a light shield device that have openings according to the beams of light which have passed through the respective lenses of the lens array to enter the beams of light into the respective polarizer areas of the filter.

It is still further preferred that the signal processing unit determines whether a road is wet or dry based on the degree of the polarization ratio of the vertical polarization image to the horizontal polarization image shot in the image pickup unit.

It is still further preferred that the signal processing unit determines what is written on a road by using the vertical polarization image shot in the image pickup unit.

It is still further preferred that each polarizer area of the filter includes a transparent substrate on which a laminate structure is formed of multiple kinds of transparent materials having different fraction indices and each layer has a concavo-convex structure having a one dimensional cycle repeated in one direction.

It is still further preferred that each polarizer area of the filter is formed of a wire grid type polarizer.

As another aspect of the present invention, there is provided a method according to claim 8.

These and other objects, features and advantages of the present invention will become apparent upon consideration of the following description of the preferred embodiments of the present invention taken in conjunction with the accompanying drawings.

Various other objects, features and attendant advantages of the present invention will be more fully appreciated as the same becomes better understood from the detailed description when considered in connection with the accompanying drawings in which like reference characters designate like corresponding parts throughout and wherein:

> Fig. 1 is an exploded perspective view illustrating a schematic structure of an optical system of an example image pickup;
> Fig. 2 is a cross section illustrating a schematic structure of the example image pickup;
> Fig. 3 is a block chart illustrating an example of the structure of the signal processing unit of the example image pickup;
> Fig. 4 is a schematic diagram illustrating methods of manufacturing a lens array;
> Fig. 5 is a perspective view illustrating an example of the structure of the polarizer area of the polarization filter for use in the present invention;
> Fig. 6 is a perspective view illustrating an example of the structure of the polarization filter;
> Fig. 7 is a perspective view illustrating methods of manufacturing the light shield spacer;
> Fig. 8 is a schematic diagram illustrating a wet status of the surface of a road;
> Fig. 9 is a characteristic chart illustrating the incident angle dependency of the vertical polarization component and the horizontal polarization component of incident light;
> Fig. 10 is a positional view illustrating the arrangement of the example image pickup attached to an auto;
> Fig. 11 is a cross section illustrating another structure of the lens array;
> Fig. 12 is an exploded perspective view illustrating a schematic structure of an embodiment of the optical system of an example image pickup of the present invention; and
> Fig. 13 is an exploded perspective view illustrating a schematic structure of another embodiment of the optical system of an example image pickup of the present invention.

The present invention will be described below in detail with reference to several examples and exemplary embodiments and accompanying drawings.

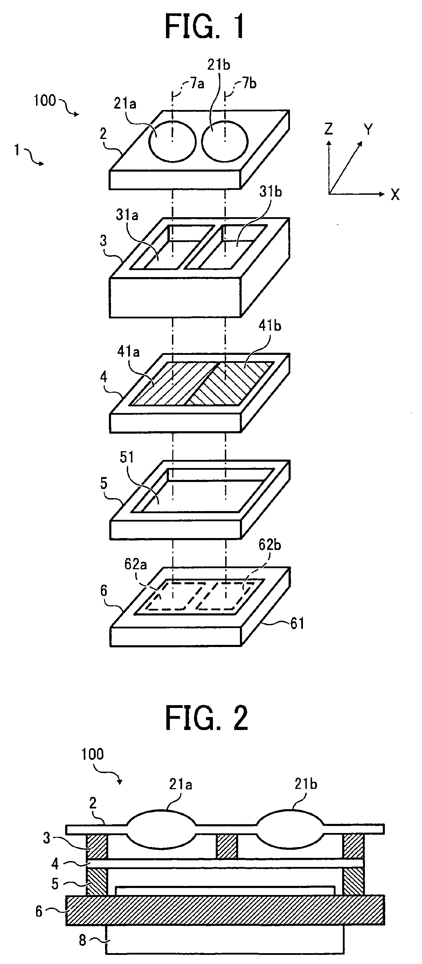

Figs. 1 and 2 are schematic diagrams illustrating the structure of an example of the optical system of the (first) image pickup. Fig. 1 is an exploded perspective view of the image pickup and Fig. 2 is a cross-section thereof. As illustrated in the figures, an optical system 1 of a first image pickup 100 is to shoot an image of the status of the surface of a road and has a laminate structure formed of a lens array 2, a light shield spacer (device) 3, a polarization filter 4, a spacer 5 and a solid image pickup unit 6. The light shield spacer 3 is optionally provided to remove flare from the adjacent portions. The light shield spacer 3 is included in the examples and exemplary embodiments described in this specification.

The lens array 2 includes two lenses 21a and 21b. These two lenses 21a and 21b are independent single lenses having the same form formed of, for example, a nonspherical lens, etc. and located in the same plane with their axes of 7a and 7b arranged in parallel with each other. When the direction in parallel with the optical axes of 7a and 7b is defined to be Z axis, a direction perpendicular to the Z axis is defined to be X axis, and the direction perpendicular to the Z axis and the X axis is defined to be Y axis, the lenses 21a and 21b are situated in the same XY plane.

The light shield spacer 3 has two openings 31a and 31b and is provided on the opposite side of an object relative to the lens array 2. The two openings 31a and 31b are holes with a predetermined size having the optical axes 7a and 7b as respective centers. The inside wall of the openings is treated (e.g., black-lacquered, roughened or matte) to prevent reflection of light.

The polarization filter 4 has two polarizer areas 41a and 41b with the polarization planes at 90 °C different from each other and is provided on the opposite side of the lens array 2 relative to the light shield spacer 3. The two polarizer areas 41a and 41b are provided in parallel with the XY plane having the optical axes 7a and 7b as the center. These two polarizer areas 41a and 41b transmit only the vibration component of no polarized light along the polarization plane direction to obtain linear polarized light. In no polarized light, the electromagnetic field vibrates in unspecified directions.

The spacer 5 is formed to have a rectangular frame form having an opening 51 having a pierced area corresponding to the areas of the polarizer areas 41a and 41b of the polarization filter 4 and situated on the opposite side of the light shield spacer 3 relative to the polarization filter 4.

The solid image pickup unit 6 has two solid image pickup elements 62a and 62b installed on a substrate 61 having a signal processing unit 8 and is situated on the opposite side of the polarization filter 4 relative to the spacer 5. The image pickup areas of the two solid image pickup elements 62a and 62b in which object images are actually focused are provided in the same plane in parallel with the XY plane having the optical axes 7a and 7b. The solid image pickup elements 62a and 62b have a color filter in front when sensing a color image and no color filter inside when sensing an image in monochrome.

The optical system 1 of the image pickup 100 has two optical systems to obtain a vertical polarization image and a horizontal polarization image from the surface of a road and is sealed between the lens array 2 and the solid image pickup unit 6 to prevent foreign material such as dust from entering into the image pickup areas of the solid image pickup elements 62a and 62b.

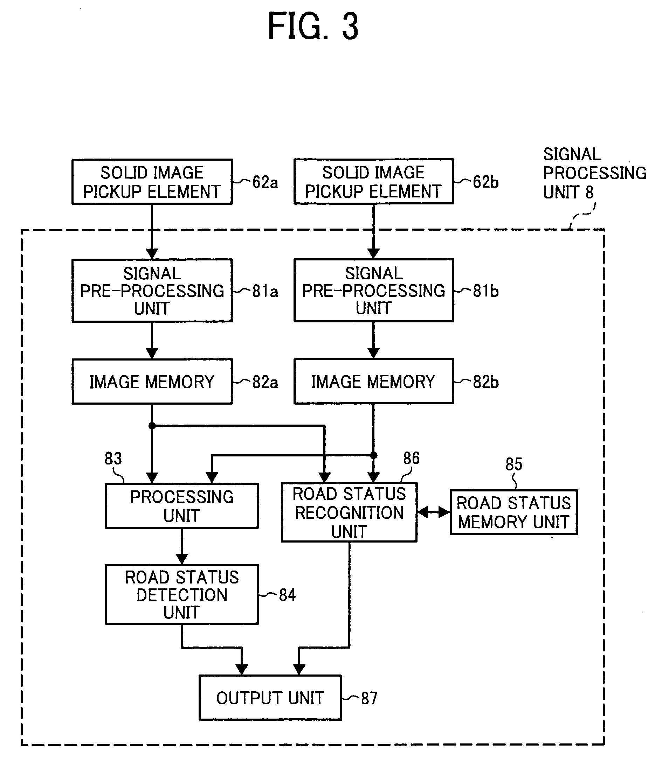

As illustrated in the block chart of Fig. 3, the signal processing unit 8 provided on the substrate 61 of the solid image pickup unit 6 of the image pickup 100 includes signal pre-processing units 81a and 81b, image memories 82a and 82b, a processing unit 83, a road status detection (discrimination) unit 84, a road status memory unit 85, a road status recognition unit 86 and an output unit 87. The signal pre-processing units 81a and 81b perform correction such as shading correction of correcting uneven sensing in an image signal output from the solid image elements 62a and 62b of the solid image pickup unit 6 and store the vertical polarization image and the horizontal polarization image of the surface of a road in the image memories 82a and 82b. The processing unit 83 calculates the polarization ratio of the vertical polarization image to the horizontal polarization image stored in the image memories 82a and 82b. The road status detection unit 84 determines the status of the surface of a road according to the polarization ratio calculated by the processing unit 83. The road status memory unit 85 stores the characters and signs written on the road in advance. The road status recognition unit 86 takes in one of or both images in the image memories 82a and 82b. For example, the road status recognition unit 86 takes in the image stored in the image memory 82a and checks it off with the characters and signs stored in the road status recognition unit 85 to recognize the image. The output unit 87 outputs the road status determined by the road status detection unit 84 and the characters and the signs recognized by the road status recognition unit 86 to an display device (not shown).

The elements forming the optical system 1 in the image pickup 100 are described in detail next.

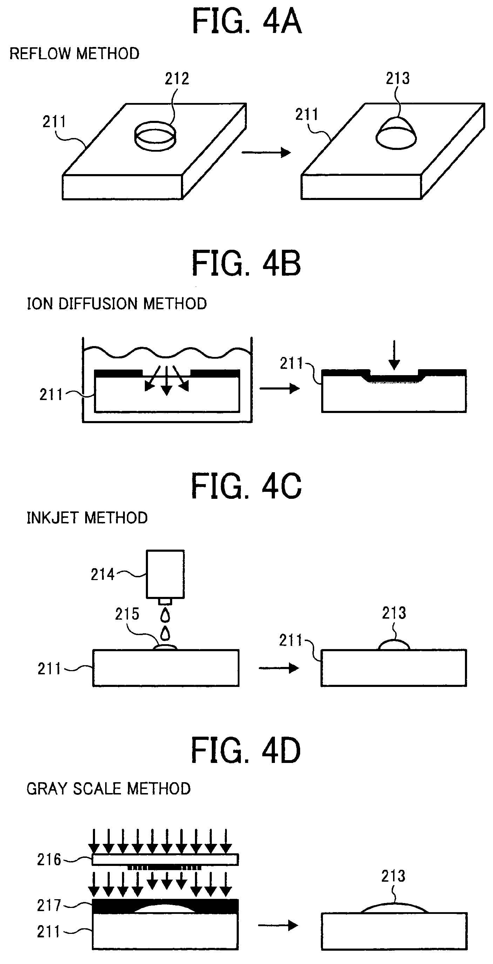

The lens array 2 of the optical system 1 is made by a reflow method illustrated in Fig. 4A, an ion diffusion method illustrated in Fig. 4B, an inkjet method illustrated in Fig. 4C, a gray scale mask method illustrated in Fig. 4D, etc. The reflow method illustrated in Fig. 4A is as follows: manufacture a photoresist pattern 212 having a pillar form by photolithography on the surface of a glass substrate 211; and heat the glass substrate 211 to flow the photoresist and form a lens form 213 by the surface tension. The ion diffusion method illustrated in Fig. 4B is a method in which gradual changes in the refraction index are made on the glass substrate 211 on which a mask to a lens form is formed by diffusing an ion such as T1$^+$ in the glass substrate 211. The inkjet method illustrated in Fig. 4C is as follows: drop a tiny amount of resin material 215 to a predetermined position using an inkjet printer head 214; and manufacture a lens form 213 by the surface tension. These methods use forms or refraction index distribution naturally made by the surface tension, or ion diffusion as a lens. The gray scale mask method illustrated in Fig. 4D is a method in which the lens form 213 is formed by controlling the form of a photoresist 217 formed on the glass substrate 211 by the transmission ratio distribution provided to a gray scale mask 216. This method is relatively suitable to form various kinds of forms in comparison with the other methods.

The reflow method and the gray scale method illustrated in Fig. 4 are illustrated until the lens form is formed by the photoresist. Generally, a lens manufactured by a photoresist has problems such that the lens manufactured as is has an insufficient transmission ratio and a weak resistance to humidity or exposure to light. Therefore, a resist pattern is transferred to a substrate material first by using an anisotropic dry etching. However, the resist form prepared by an anisotropic dry etching process may significantly different from the resist form before the etching. Thus, manufacturing a lens with a small error from the target form is difficult. In addition, this form change varies depending on the kind of used etching devices, the etching condition, and the kind of the material for a substrate. Particularly, the important factors such as the transmission ratio, the wavelength range, and the refraction index in terms of the evaluation on a lens are affected by the kind of the substrate. Therefore, making it possible to manufacture a lens having a high form precision to various kinds of substrate material is preferable.

In addition, a typical method of manufacturing a lens by grinding and a mold method of manufacturing a die and sealing a resin material into the die are also suitably used.

Furthermore, a method of shooting an image with multiple lenses for one image pickup element is known as a compound eye system. Such a compound system is known as a suitable method to reduce the thickness of an image pickup. That is, an image pickup which forms an image by focusing an object on a solid image pickup element via a lens system is widely used from a digital still image pick up to an image pickup for a mobile phone. In recent years, an image pickup has been demanded to increase the number of pixels and reduce the size in thickness. In general, a lens system having a high definition is required as the number of pixels increases. Therefore, the thickness of an image pickup tends to increase in the optical axis direction. Thus, manufacturing an image pickup which has a scale down lens system by decreasing the pixel pitch of the image pickup to reduce the size of the image pickup element while having the same number of the pixels has been attempted to obtain an image pickup having a large number of pixels with a thin stricture. However, since the sensitivity of a solid image pickup element and its saturation output are in proportion to the size of a pixel, the size reduction of the pitch of the pixel is limiting. Therefore, a system known as a single lens system including a one or two lenses along the optical axis and a solid image pickup element arranged on the optical axis is generally used. To the contrary, recently an image pickup is proposed which includes multiple lens systems arranged in the same plane and multiple image pickup areas corresponding to the multiple lens systems one to one. This image pickup is referred to as a compound eye system because the image pickup includes multiple image pickup units each of which has a pair of lens systems and one image pickup area. This kind of image pickup has an increasing number of pixels with a thin structure. Therefore, in an example, the lens array 2 having two lenses 21a and 21b is provided and an obtained image is synthesized with light entering into the lenses 21a and 21b, passing through the polarizer areas 41a and 41b of the polarization filter 4 and entering into the solid image pickup elements 62a and 62b of the solid image pickup unit 6. Thereby, quality images are obtained while realizing the size reduction in the thickness direction.

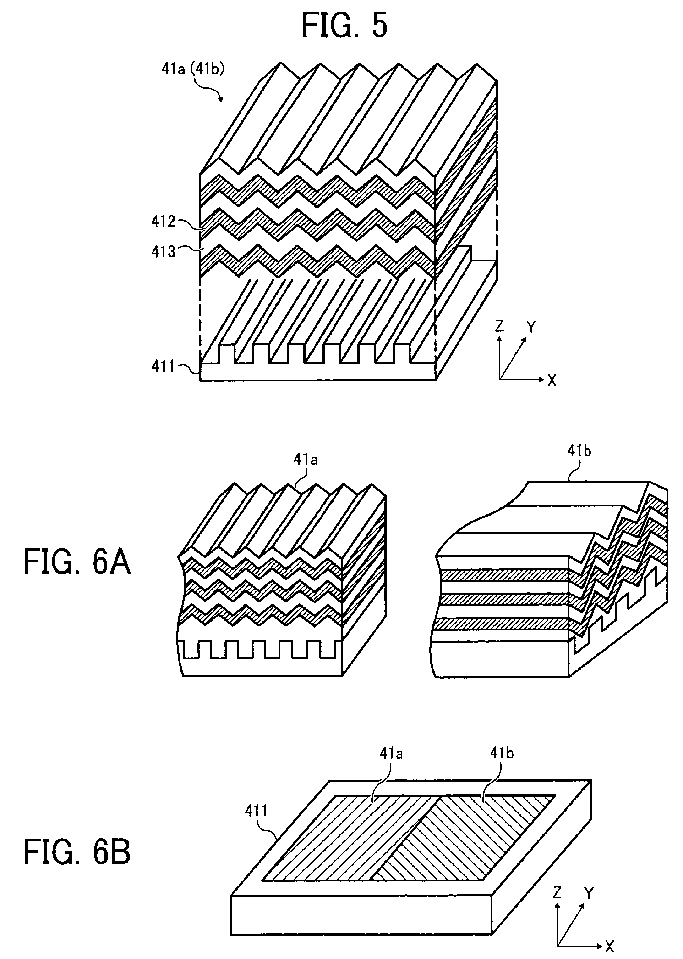

Next, Fig. 5 is a perspective view illustrating the polarizer areas 41a and 41b of the polarization filter 4. The polarizer areas 41a and 41b are formed of a polarizer formed of, for example, photonic crystal. As illustrated in Fig. 5, the polarizer areas 41a and 41b are formed by alternately accumulating a transparent medium layer 412 having a high fraction index and a medium layer 413 having a low refraction index on a transparent substrate 411 while maintaining the interface form. The transparent substrate 411 has a structure in which grooves are periodically arranged. Each of the medium layer 412 and the medium layer 413 have a periodic structure in the X direction perpendicular to the grooves of the transparent substrate 411 but may have a uniform structure or a periodic or non-periodic structure having a longer cycle than that in the X direction in the Y direction in parallel with the grooves. Such a fine periodic structure of photonic crystal can be manufactured with high reproducibility and uniformity by a system using a technology referred to as the self-cloning technology.

The polarizer areas 41a and 41b formed of the photonic crystal is of a laminar structure, for example, including multiple alternate layers of $Ta_2O_5$ and $SiO_2$, in which at least two kinds of transparent material are alternately accumulated along the Z axis on one substrate 411 arranged in parallel with the XY plane in the orthogonal coordinate system having Z axis in parallel with the optical axes 7a and 7b with X and Y axes perpendicular to the Z axis as illustrated in the perspective view of Fig. 6. Each layer in the polarizer areas 41a and 41b has a concavo-convex form which is periodically repeated in one direction in the XY plane. The polarizer area 41a has grooves arranged in the direction in parallel with the Y axis and the polarizer area 41b has grooves arranged in the direction in parallel with the X axis as illustrated in Fig. 6B. That is, the polarizer areas 41a and 41b have grooves having their directions 90° apart from each other.

Thus, the polarizer areas 41a and 41b transmit the polarization components having different polarization directions from the light entering into the XY plane and also the same amount of non-polarization components passes through the polarizer areas 41a and 41b. The grooves having two kinds of concavo-convex forms are provided to the polarization filter 4 but the direction of the groove having the concavo-convex forms may be multiple. By forming the polarizer areas 41a and 41b with the photonic crystal as described above, these are highly durable over an extended period of time against ultraviolet deterioration, etc.

The opening areas and the transmission axes of the polarizer areas 41a and 41b can be freely designed by the size and direction of the groove patterns processed on the transparent substrate 411 first. The groove patterns are formed by various kinds of methods using, for example, electron beam lithography or photolithography, interference exposure, or nano-printing. In any method thereof, the groove direction can be determined for each area with high precision. Therefore, a polarizer area having a combination of fine polarizers having different transmission axes, and a polarizer having multiple polarizer areas can be formed. In addition, only a particular area having a concavo-convex pattern functions as a polarizer. Therefore, when the areas around the particular area are made to have a flat pattern or a concavo-convex pattern isotropic in the plane, light transmits the areas as media not having polarized wave dependency. Therefore, a polarizer can be formed on a particular area.

The image pickup 100 is arranged such that the groove direction of one of the polarizer areas 41a and 41b of the polarization filter 4, for example, the polarizer areas 41b, is arranged in parallel with the surface of a road to obtain the vertical polarization image and the horizontal polarization image of the reflection light from the surface of a road by the polarizer areas 41a and 41b.

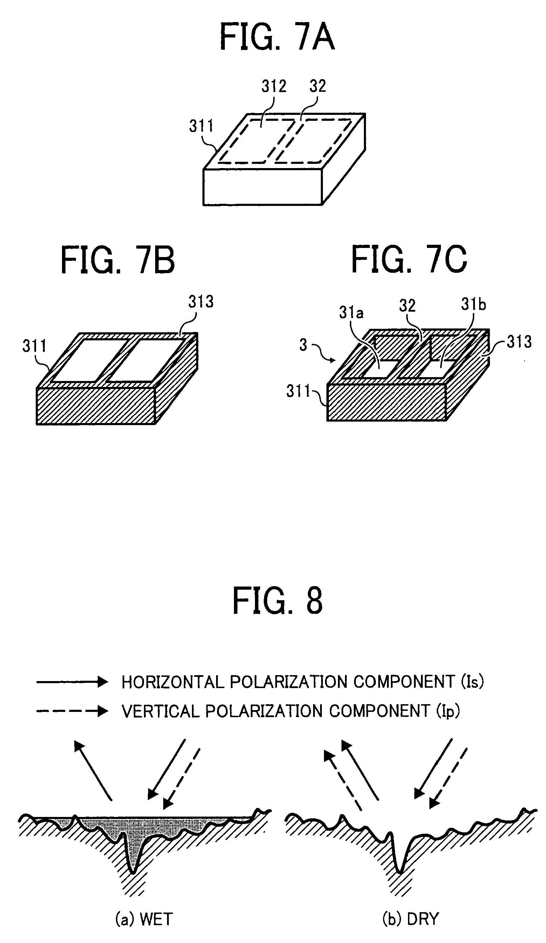

Next, the method of manufacturing the light shield spacer 3 is described with reference to the perspective views of Fig. 7. As illustrated in Fig. 7A, a paint 312 that shields ultraviolet is applied to the outside surface of a sensitive glass substrate 311 containing silver and the paint 312 is removed from a portion 312 where a light shield wall 32 is formed. The paint 312 is removed after irradiation of ultraviolet on the sensitive glass substrate 311. Silver precipitates on the portion 312 where the light shield wall 32 is formed by direct irradiation of ultraviolet among the sensitive glass substrate 311 and is blackened to form a light shield portion 313. This light shield portion 313 is also formed on the inside of the glass of the portion 312 where the light shield wall 32 is formed. Thereafter, portions of the glass substrate 311 other than the portion 312 where the light shield wall 32 is formed are removed by mechanical processing or etching to form two openings 31a and 31b and the light shield wall 32 having the light shield portion 313. The light shield spacer 3 having two openings 31a and 31b are thus easily prepared. Leaking of light to the adjacent polarizer area is securely prevented by arranging the openings 31a and 31b of the light shield spacer 3 corresponding to the polarizer areas 41a and 41b of the polarization filter 4. In addition, since the inside wall of the openings 31a and 31b are blackened, stray light created by reflection at the inside wall does not enter into the solid image pickup elements 62a and 62b of the solid image pickup unit 6.

Detection operation of the road status by the image pickup 100 structured as described above is described next.

The image pickup 100 is arranged such that the groove direction of one of the polarizer areas 41a and 41b of the polarization filter 4 of the image pickup 100, for example, the polarizer areas 41b, is arranged in parallel with the surface of a road and attached to an auto to shoot an image of the surface of a road. The light incident into the lens 21a of the lens array 2 in this image shooting enters into the polarizer area 41a of the polarization filter 4 via the light shield spacer 3 and thereafter at the polarizer area 41a only the vertical polarization component of the light enters into the solid image pickup element 92a of the solid image pickup unit 6. In addition, the light incident into the lens 21b of the lens array 2 in this image shooting enters into the polarizer area 41b of the polarization filter 4 via the light shield spacer 3 and thereafter at the polarizer area 41b only the horizontal polarization component of the light enters into the solid image pickup 92b of the solid image pickup unit 6. The signal of the image shot by the solid image pickup elements 92a and 92b are processed by the signal preprocessing unit 81a and 81b of the signal processing unit 8 and the vertical polarization image and the horizontal polarization image are stored in the image memories 81a and 82b, respectively. The processing unit 83 calculates the polarization ratio of the vertical polarization image to the horizontal polarization image stored in the image memories 81a and 82b and outputs it to the road status detection unit 84. The road status detection unit 84 determines the wet status of the surface of a road according to the degree of the input polarization ratio of the vertical polarization image to the horizontal polarization image. The road status detection unit 84 determines whether the surface of a road has a defect by comparison between the polarization ratio of the vertical polarization image to the horizontal polarization image and the criterion values set in advance to obtain whether the input polarization ratio surpasses the reference value.

The processing of the determination on the status of the surface of a road by the road status detection unit 84 is described with reference to the schematic diagram in Fig. 8 next. As illustrated in Fig. 8A, the road status during wet behaves like a mirror because the water makes a pool on the road. Thus, the reflection light from the mirror has polarization characteristics. When the reflection ratios of the vertical polarization component and the horizontal polarization component are defined as Ra and Rp, respectively, the intensities Is and Ip of the reflection light beams of the incident light having an intensity of I satisfy the following relationships:

$$Is = Rs \times I$$

$$Ip = Rp \times I$$

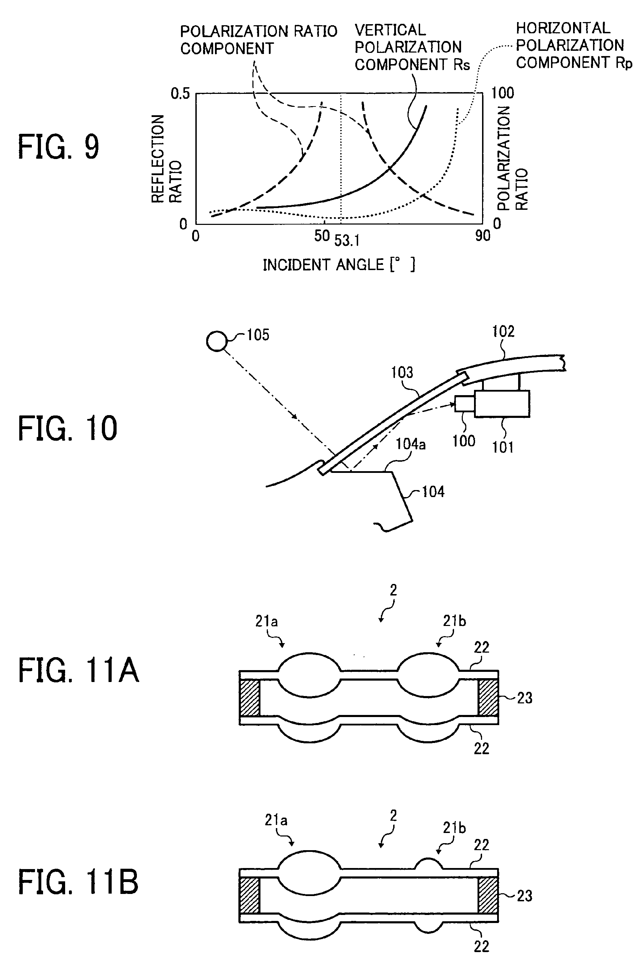

The incident angle dependency is as illustrated in Fig. 9.

The horizontal polarization component of the reflection light at the mirror is zero when the incident angle thereof is equal to Brewster's angle (53.1 °). The vertical polarization component of the reflection light is characteristic in that the intensity of the reflection light gradually increases as the incident angle increases.

On the other hand, as illustrated in Fig. 8B, since the surface of a road is rough when the road is dry, scattered reflection is dominant. Therefore, the reflection light does not have a polarization characteristic and thus, the intensity of the reflection light of each polarization component is almost equal (i.e., Rs = Rp) . Therefore, information on moisture on the surface of a road can be obtained from luminance information of the horizontal polarization image and the vertical polarization image based on the polarization characteristics.

To be specific, the ratio of the reflection light intensity Is of the vertical polarization component to the reflection light intensity Ip of the horizontal polarization component, i.e., the ratio of the image luminance (H) is obtained as follows:

$$H = Is/Ip = Rs/Rp$$

The ratio H of the reflection light intensity Is to the reflection light intensity Ip does not dependent on the incident light intensity I. Therefore, the polarization characteristics can be stably obtained while removing the influence caused by the luminance change of the outer environment.

The luminance average, etc. of the luminance ratio H is obtained and used to determine the wet status of the surface of a road based on the scale of the values. For example, when the surface of a road is dry, the vertical polarization component and the horizontal polarization component are significantly the same and thus, the luminance ratio H is around 1. To the contrary, when the surface of a road is totally wet, the horizontal polarization component is considerably larger than the vertical polarization component, and thus the luminance ratio is large. In addition, when the surface of a road is slightly wet, the luminance ratio H is between the cases described above. Therefore, the wet status of the surface of a road can be determined according to the value of the luminance ratio H.

The information on the wet status and/or the defect condition of the surface of a road detected by the road status detection unit 84 is output from the output unit 87 to a display device (not shown) . As described above, according to the present invention, defined by the appended claims, information on the wet status of the surface of a road can be obtained by a car traveling a road and can be used to issue a caution such as "Slippery".

The road status recognition unit 86 reads, for example, the vertical polarization image stored in the image memory 82a and recognizes the characters and the signs written on the surface of a road by comparing the image on the road with the characters and signage stored in the road status memory unit 85. Therefore, the present invention preferably securely detects signage such as speed limit, stop, or white line to divide lanes written on the surface of a road and provides the information to highly assist a driver with driving.

The advantage of reading the vertical polarization image by the road status recognition unit 86 is described with reference to the diagram of the driver seat portion of a car illustrated in Fig. 10. In Fig. 10, 101 represents the rear view mirror, 102 represents the ceiling of the car, 103 represents the windshield, 104 represents the dash board and 104a represents the upper surface of the dash board. The image pickup 100 is attached to the rear side of the rear view mirror 101. Light beams of the sun 105 enter into the driver seat portion, reflect at the upper surface 104a of the dash board 104 and enter into the inside of the windshield 103. When the reflection light reflected again at the windshield 103 enters into the image pickup 100, the contrast of the image that should be obtained at the image pickup 100 is significantly reduced. This is referred to as a problem of an image from the windshield 103. This phenomenon is particularly notable when a thing or material such as a book of maps or towel which has a high reflection index is placed on the upper surface 104a of the dash board 104.

Such reflection light from the glass is polarized in one direction (horizontal polarization component) with regard to the vibration direction of light. Therefore, an image on the road status can be taken in a state in which the affect of the image from the windshield 103 is reduced by taking out the vertical polarization image by the road status recognition unit 86 of the image pickup 100. The horizontal polarization component among the reflection light at the surface of a road of the light beams of the sun 105 can be also cut.

A case of the system in which the lenses 21a and 21b of the lens array 2 are structured by simple lenses is described above but as illustrated in Fig. 11A, multiple lens arrays 22 are accumulated with a spacer 23 therebetween to form the lens array 2. When a plural of the lens arrays 22 are accumulated, each lens form can be simplified for suitable purposes. In addition, as illustrated in Fig. 11B, the lens forms of the plural of the lens arrays 22 can be also changed. For example, iris can be adjusted by changing the aperture of the lens since the amount of incident light is different according to the polarization direction.

In addition, the case in which the polarizer areas 41a and 41b of the optical filter 4 are formed by photonic crystal is described above. A polarizer of a wire grid type can be used for the polarizer areas 41a and 41b. The polarizer of a wire grid type is formed by arranging a thin metal wire in a periodic manner and typically used in the millimeter wave range of electromagnetic wave. The structure of the wire grid type polarizer is that metal fine lines sufficiently thin in comparison with the wavelength of incident light are arranged with a gap therebetween which is sufficiently short in comparison with the wavelength. When light enters into such a structure, it is known that the polarization light in parallel with the metal fine lines is reflected and the polarization light perpendicular thereto passes through the structure. The metal fine lines can be prepared while independently varying the direction of the metal fine lines depending on areas in one substrate. Therefore, the characteristics of the wire grid polarizer can be changed area by area. Accordingly, by using this, a structure in which the direction of the transmission axis is changed according to the polarizer areas 41a and 41b can be manufactured.

This wire grid is manufactured by forming a metal layer on a substrate and patterning by lithography to leave the metal in fine line manner. In addition, in another method, grooves are formed on a substrate by lithography and thereafter a metal layer is formed by vacuum deposition from a direction perpendicular to the direction of the grooves and angled relative to the normal line of the substrate (i.e., direction slanted from the substrate plane). In the vacuum deposition, particles fly from the deposition source to the substrate straightforward and hardly collide with other molecules or atoms in the middle of their paths. Therefore, a layer is formed on the convex portions forming the grooves and hardly formed on the bottom (concave portions) of the grooves because the convex portions shield the concave portions. Therefore, the metal layer is formed only on the convex portion of the grooves formed on the substrate and thus metal fine lines are formed. Aluminum or silver is preferable as the wire metal for use in the wire grid type polarizer. However, other metals such as tungsten can be also used. Optical lithography, electron beam lithography, X ray lithography, can be used as the lithography. Among these, electron beam lithography or X ray lithography is more preferable considering that the gap between the fine lines is about 100 nm assuming the operation for optical light. In addition, the vacuum deposition is desired for metal layer formation. However, since the direction of particles entering into the substrate is the main factor, sputtering in an atmosphere having a high vacuum degree or collimation sputtering using a collimator can be also used.

The image pickup 100 having the optical system 1 structured by the lens array 2 including the two lenses 21a and 21b and the polarization filter 4 formed of the two polarizer areas 41a and 41b are described. According to the invention, defined by the appended claims, at least two lens arrays 2 and polarization filters 4 are used in one structure.

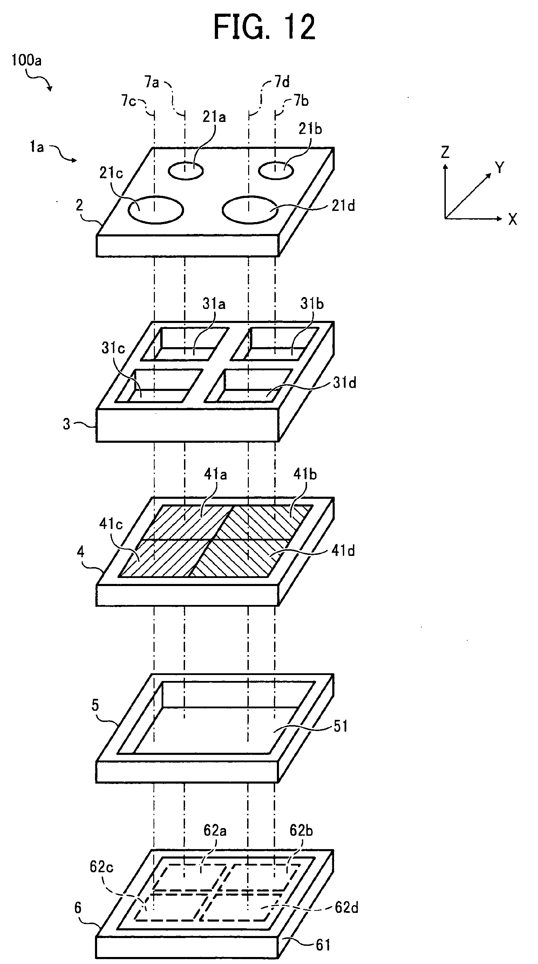

For example, as illustrated in the exploded perspective view of Fig. 12, an optical system 1a of a (second) image pickup 100a includes the lens array 2 formed of four lenses 21a, 21b, 21c and 21d and the polarization filter 4 having four polarizer areas 41a, 41b, 41c and 41d. Among the four lenses 21a, 21b, 21c and 21d of the lens array 2, the lenses 21a and 21b are formed of a single lens having the same form formed of, for example, aspheric lens, etc. and the lenses 21a and 21b are formed of a single lens having a form different from that of the lenses 21a and 21 b which is formed of, for example, aspheric lens, etc. These four lenses are arranged in the same plane. Among these four lenses, the lenses 21a and 21b are for long distance with a relatively long focal point distance and a narrow angle of view and the lenses 21c and 21d are for short distance with a relatively short focal point distance and a wide angle of view. The long distance represents a rough range of from 30 to 100 m and the short distance represents a rough range of from 2 to 30 m ahead of a car. With regard to the angle of view, approximately 10 ° is for the long distance and approximately 30 ° for the short distance.

The light shield spacer 3 has four openings 31a, 31b, 31c and 31d and is provided on the opposite side of an object relative to the lens array 2. The four openings 31a, 31b, 31c and 31d are holes with a predetermined size having the optical axes 7a, 7b, 7c and 7d as respective centers. The inside wall of the openings is treated (e.g., black-lacquered, roughened or matte) to prevent reflection of light.

The polarization filter 4 has two polarizer areas 41c and 41d with the polarization planes 90 °C different from each other as well as the two polarizer areas 41a and 41b with the polarization planes 90 °C different from each other and is provided on the opposite side of lens array 2 relative to the light shield spacer 3. The four polarizer areas 41a, 41b, 41c and 41d are provided in parallel with the XY plane while having the optical axes 7a, 7b, 7c and 7d as the centers, respectively. These four polarizer areas 41a, 41b, 41c and 41d transmit only the vibration component of no polarized light along the polarization plane direction to obtain linear polarized light. In no polarized light, the electromagnetic field vibrates in unspecified directions.

The spacer 5 is formed to have a rectangular frame form having an opening 51 which has pierced areas corresponding to the areas of the polarizer areas 41a, 41b, 41c and 41d of the polarization filter 4 and situated on the opposite side of the light shield spacer 3 relative to the polarization filter 4.

The solid image pickup unit 6 has four solid image pickup elements 62a, 62b, 62c and 62d installed on the substrate 61 having the signal processing unit 8 and is situated on the opposite side of the polarization filter 4 relative to the spacer 5. The image pickup areas of the four solid image pickup elements 62a, 62b, 62c and 62d in which object images are actually focused are provided in the same plane in parallel with the XY plane while having the optical axes 7a, 7b, 7c and 7d. The solid image pickup elements 62a, 62b, 62C and 62d have a color filter in front when sensing a color image and no color filter inside when sensing an image in monochrome.

The optical system 1a of the (second) image pickup 100a has two optical systems to obtain a vertical polarization image and a horizontal polarization image from the surface of a road and is sealed between the lens array 2 and the solid image pickup unit 6 to prevent foreign material such as dust from entering into the image pickup areas of the solid image pickup elements 62a, 62b, 62c and 62d.

The optical system 1a of the (second) image pickup 100a has the lens array 2 in which the lenses 21a and 21b for the long distance and the lenses 21c and 21d for the short distance are arranged. Therefore, both images shot at the long distance and the short distance are optimally focused. The signal processing unit 8 is provided at the step following each of the solid image pickup elements 62a, 62b, 62C and 62d as in the case of the optical system 1 of the (first image pickup 100. Thus, the (second) image pickup 100a has high robust property by shooting a polarization ratio image in comparison with the (first) image pickup 100. As a method of conveying the polarization ratio image to a driver, for example, there is a method in which only the image shot at the short distance is displayed on a monitor when a car travels at a low speed and only the image shot at the long distance is displayed on a monitor when a car travels at a high speed. Also, a method is suitable in which both images are displayed in one screen, that is, for example, the image shot at the long distance is displayed on the center on the monitor and the image shot at the short distance is displayed around the center.

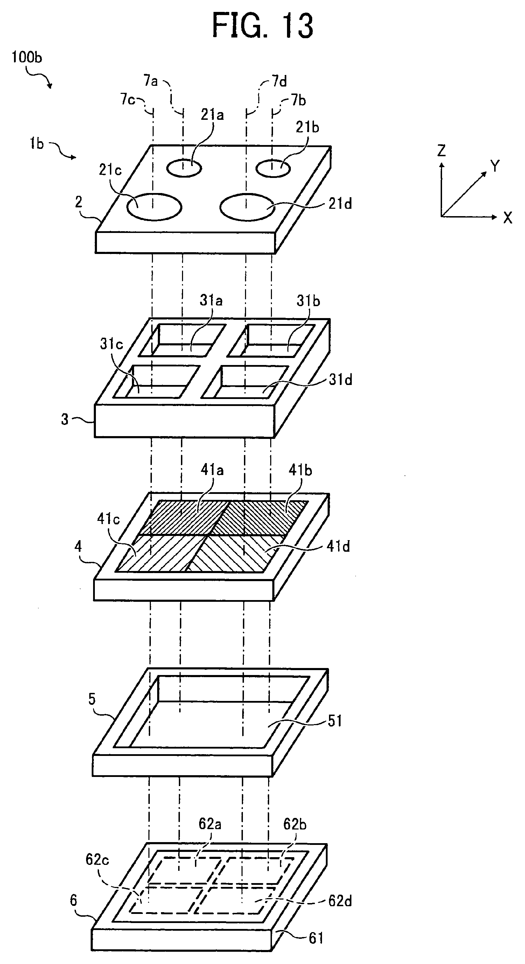

The optical system 1a of the (second) image pickup 100a has a structure including the lenses 21a and 21b for the long distance with a relatively long focal point distance and a narrow angle of view and the lenses 21c and 21d for the short distance with a relatively short focal point distance and a wide angle of view. Next, an optical system 1b of a (third) image pickup 100b that includes the lens array 2 having four lenses 21a, 21b, 21c and 21d formed of a single lens having the same form formed of, for example, aspheric lens, etc. is described with reference to the exploded perspective view of Fig. 13.

The single lenses 21a, 21b, 21c and 21d having the same form formed of aspheric lens in the lens array 2 of the optical system 1b of the (third) image pickup 100b are arranged in the same plane.

The light shield spacer 3 has four openings 31a, 31b, 31c and 31d and is provided on the opposite side of an object relative to the lens array 2. The four openings 31a, 31b, 31c and 31d are holes with a predetermined size while having the optical axes 7a, 7b, 7c and 7d as respective centers. The inside wall of the openings is treated (e.g., black-lacquered, roughened or matte) to prevent reflection of light.

The polarization filter 4 has two polarizer areas 41a and 41b with the polarization planes 90 °C different from each other and the two polarizer areas 41c and 41d with the polarization planes 90 °C different from each other and is provided on the opposite side of lens array 2 relative to the light shield spacer 3. The four polarizer areas 41a, 41b, 41c and 41d are provided in parallel with the XY plane having the optical axes 7a, 7b, 7c and 7d as the centers, respectively. These four polarizer areas 41a, 41b, 41c and 41d transmit only the vibration component of no polarized light along the polarization plane direction to obtain linear polarized light. In no polarized light, the electromagnetic field vibrates in unspecified directions. The polarizer areas 41a and 41b are that the structure of the wire grid or photonic crystal is optimized when the transmission wavelength is from 450 to 650 nm (optical light range) and the polarizer areas 41c and 41d are that the structure of the wire grid or photonic crystal is optimized when the transmission wavelength is from 650 to 1,000 nm (near infrared range). In general, the pitch of the periodic structure is wide on the long wavelength side.

The spacer 5 is formed to have a rectangular frame form having an opening 51 which has pierced areas corresponding to the areas of the polarizer areas 41a, 41b, 41c and 41d of the polarization filter 4 and situated on the opposite side of the light shield spacer 3 relative to the polarization filter 4.

The solid image pickup unit 6 has four solid image pickup elements 62a, 62b, 62c and 62d installed on the substrate 61 having the signal processing unit 8 and is situated on the opposite side of the polarization filter 4 relative to the spacer 5. The image pickup areas of the four solid image pickup elements 62a, 62b, 62c and 62d in which object images are actually focused are provided in the same plane in parallel with the XY plane having the optical axes 7a, 7b, 7c and 7d. The solid image pickup elements 62a, 62b, 62C and 62d have a color filter in front when sensing a color image and no color filter inside when sensing an image in monochrome.

The optical system 1b of the (third) image pickup 100b has two optical systems to obtain a vertical polarization image and a horizontal polarization image from the surface of a road and is sealed between the lens array 2 and the solid image pickup unit 6 to prevent foreign material such as dust from entering into the image pickup areas of the solid image pickup elements 62a, 62b, 62c and 62d.

The image pickup 100b having the optical system 1b using the polarization filter 4 including the polarizer areas 41a and 41b for the optical light range and the polarizer areas 41c and 41d for the near infrared range for the polarizer areas are suitable to focus images at daytime and night. That is, the image pickup 100b produces polarization ratio images based on the information from the polarizer areas 41a and 41b optimized for the optical right range during daytime, and the information from the polarizer areas 41c and 41d optimized for the near infrared range at night. In general, images shot at night according to the information in the optical light range are difficult to discriminate and thus using light having a wavelength of near infrared or far infrared is well known. In addition, a car to which the image pickup is attached irradiates a road with headlight having a wavelength in the range of near infrared. The signal processing unit 8 is provided at the step following each of the solid image pickup elements 62a and 62b, and 62C and 62d as in the case of the optical system 1 of the (first) image pickup 100. Thus, the image pickup 100b has high robust property in daylight or at night when shooting a polarization ratio image in comparison with the (first) image pickup 100. The method of conveying the polarization ratio image to a driver is that only the optical light image is displayed on a monitor when the headlight is off and only the near infrared image is displayed on a monitor at night. In addition, for example, a typically known sunshine sensor is provided to automatically switch the images on a monitor according to the output value of the sunshine sensor.

In the exemplary embodiments described above, images ahead of a car are shot by the image pickups 100, 100a or 100b. In addition, images at left-hand or right-hand side of a car or behind a car can be shot by these image pickups. Furthermore, the image pickup 100, 100a and 100b are not limited to the usage for a car but can be used for a factory (for factory automation) or a healthcare medical field, however, the scope of the present invention is limited and defined by the appended claims.

This document claims priority and contains subject matter related to Japanese Patent Applications Nos. 2008-158594 and 7274, filed on June 18, 2008, and January 16, 2009.

## Claims

1. An image pickup (100a, 100b) comprising:

   a lens array (2) comprising a substrate on which multiple lenses (21a-21d) are provided;
   a filter (4) comprising at least two polarizer areas (41a-41d) with respective perpendicular axes which are separated according to beams of light which have passed through the respective lenses (21a-21d) of the lens array (2);
   an image pickup unit (6) comprising multiple image pickup areas (62a-62d) configured to shoot images of an object by receiving the beams of light which have passed through the respective corresponding polarizer areas (41a-41d) of the filter (4);
   a signal processing unit (8) configured to process image signals of the images of the object shot in the multiple image pickup areas (62a-62d) of the image pickup unit (6),

wherein the image pickup (100a, 100b) is configured such that in use a vertical polarization image is shot at one of the image pickup areas (62a-62d) and a horizontal polarization image is shot at another image pickup area (62a-62d), and

wherein the signal processing unit (8) is configured to produce an image according to a polarization ratio of a vertical polarization image to a horizontal polarization image shot in the image pickup unit (6), **characterized in that**:

the multiple lenses (21a-21d) of the lens array (2) comprise at least four lenses (21a-21d);

the filter (4) has at least four polarizer areas (41a-41d) corresponding to the at least four lenses (21a-21d);

the image pickup unit (6) has at least four image pickup areas (62a-62d) configured respectively to receive beams of light that have passed through each one of the at least four lenses (21a-21d);

a first pair (21a, 21b) of the at least four lenses (21a-21d) are for long distance, having a first focal point distance and a first image angle, the two polarizer areas (41a, 41b) corresponding to the first pair of lenses (21a, 21b) having transmission axes that are perpendicular to each other such that in use a vertical polarization image is shot at one of the two of the image pickup areas (62a, 62b) corresponding to the first pair of lenses (21a, 21b) and a horizontal polarization image is shot at the other of the two of the image pickup areas (62a, 62b) corresponding to the first pair of lenses (21a, 21b) ;

a second pair (21c, 21d) of the at least four lenses (21a-21d) are for short distance, having a second focal point distance and a second image angle, the two polarizer areas (41c, 41d) corresponding to the second pair of lenses (21c, 21d) having transmission axes that are perpendicular to each other such that in use a vertical polarization image is shot at one of the two of the image pickup areas (62c, 62d) corresponding to the second pair of lenses (21c, 21d) and a horizontal polarization image is shot at the other of the two of the image pickup areas (62c, 62d) corresponding to the second pair of lenses (21c, 21d);

the first focal point distance is longer than the second focal point distance, and the first image angle is narrower than the second image angle; and

the signal processing unit (8) is configured to produce an image according to a polarization ratio of the vertical polarization image to the horizontal polarization image shot in the image pickup unit (6) via the first pair of lenses (21a, 21b) for long distance and an image according to a polarization ratio of the vertical polarization image to the horizontal polarization image shot in the image pickup unit (6) via the second pair of lenses (21c, 21d) for short distance.

2. The image pickup (100a, 100b) according to Claim 1, further comprising a light shield device (3) configured to have openings (31a-31d) according to the beams of light which have passed through the respective lenses (21a-21d) of the lens array (2) to enter the beams of light into the respective polarizer areas (41a-41d) of the filter (4).

3. The image pickup (100a, 100b) according to Claim 1 or 2, wherein the signal processing unit (8) is arranged to determine whether a road is wet or dry based on a degree of at least one of the produced polarization ratios.

4. The image pickup (100a, 100b) according to any one of Claims 1 to 3, wherein the signal processing unit (8) is arranged to determine what is written on a road by using a vertical polarization image shot in the image pickup unit (16).

5. The image pickup (100a, 100b) according to any one of Claims 1 to 4, wherein each polarizer area (41a-41d) of the filter (4) comprises a transparent substrate on which a laminate structure is formed of multiple kinds of transparent materials having different fraction indices and each layer has a concavo-convex periodic structure having a one dimensional cycle repeated in one direction.

6. The image pickup (100a, 100b) according to any one of Claims 1 to 4, wherein each polarizer area (41a-41d) of the filter (4) is formed of a wire grid type polarizer having a periodic structure.

7. An image pickup according to claim 5 or 6, wherein:

the pitch of the periodic structure of the polarizer areas (41a, 41b) corresponding to the first pair of lenses (21a, 21b) is smaller than the pitch of the periodic structure of the polarizer areas (41c, 41d) corresponding to the second pair of lenses (21c, 21d).

8. A method of detecting a road status comprising:

shooting a vertical polarization image of reflection light from a road with an image pickup (100a, 100b) comprising a lens array (2) comprising a substrate on which multiple lenses (21a-21d) are provided, and a filter (4), wherein the filter (4) comprises at least two polarizer areas (41a-41d) with respective perpendicular axes which are separated according to beams of light which have passed through the respective lenses (21a-21d) of the lens array (2) and an image pickup unit (6) comprising multiple image pickup areas (61a-61d) configured to shoot images of an object by receiving the beams of light which have transmitted each area of the filter (4), in one of the multiple image pickup areas (61a-61d);

shooting a horizontal polarization image of the reflection light from the road with the image pickup (100a, 100b) in another one of the multiple image pickup areas (61a-61d); and

detecting the road status from a polarization ratio of the vertical polarization image to the horizontal polarization image shot in the image pickup unit (6), **characterized in that**:

the multiple lenses (21a-21d) of the lens array (2) comprise at least four lenses (21a-21d);

the filter (4) has at least four polarizer areas (41a-41d) corresponding to the at least four lenses (21a-21d);

the image pickup unit (6) has at least four image pickup areas (62a-62d) configured respectively to receive beams of light that have passed through each one of the at least four lenses (21a-21d);

a first pair (21a, 21b) of the at least four lenses (21a-21d) are for long distance, having a first focal point distance and a first image angle, the two polarizer areas (41a, 41b) corresponding to the first pair of lenses (21a, 21b) having transmission axes that are perpendicular to each other such that in use a vertical polarization image is shot at one of the two of the image pickup areas (62a, 62b) corresponding to the first pair of lenses (21a, 21b) and a horizontal polarization image is shot at the other of the two of the image pickup areas (62a, 62b) corresponding to the first pair of lenses (21a, 21b);

a second pair (21c, 21d) of the at least four lenses (21a-21d) are for short distance, having a second focal point distance and a second image angle, the two polarizer areas (41c, 41d) corresponding to the second pair of lenses (21c, 21d) having transmission axes that are perpendicular to each other such that in use a vertical polarization image is shot at one of the two of the image pickup areas (62c, 62d) corresponding to the second pair of lenses (21c, 21d) and a horizontal polarization image is shot at the other of the two of the image pickup areas (62c, 62d) corresponding to the second pair of lenses (21c, 21d);

the first focal point distance is longer than the second focal point distance, and the first image angle is narrower than the second image angle; and

the method further comprises:

producing an image according to a polarization ratio of the vertical polarization image to the horizontal polarization image shot in the image pickup unit (6) via the first pair of lenses (21a, 21b) for long distance and an image according to a polarization ratio of the vertical polarization image to the horizontal polarization image shot in the image pickup unit (6) via the second pair of lenses (21c, 21d) for short distance.

9. A vehicle having an image pickup device according to any one of claims 1 to 7 installed therein.

**Patentansprüche**

1. Bildaufnahmevorrichtung (100a, 100b), die Folgendes umfasst:

eine Linsenanordnung (2), die ein Substrat umfasst, auf dem mehrere Linsen (21a-21d) bereitgestellt sind;

ein Filter (4), das mindestens zwei Polarisationsbereiche (41a-41d) mit jeweiligen senkrechten Achsen umfasst, die nach Lichtstrahlen getrennt sind, die durch die jeweiligen Linsen (21a-21d) der Linsenanordnung (2) geleitet wurden;

eine Bildaufnahmeeinheit (6), die mehrere Bildaufnahmebereiche (62a-62d) umfasst, die dafür konfiguriert sind, Bilder eines Objekts aufzunehmen, indem sie die Lichtstrahlen empfangen, die durch die jeweiligen entsprechenden Polarisationsbereiche (41 a-41 d) des Filters (4) geleitet wurden;

eine Signalverarbeitungseinheit (8), die dafür konfiguriert ist, Bildsignale der Bilder des Objekts zu verarbeiten, das in den mehreren Bildaufnahmebereichen (62a-62d) der Bildaufnahmeeinheit (6) aufgenommen wurde,

wobei die Bildaufnahmevorrichtung (100a, 100b) so konfiguriert ist, dass bei Verwendung ein vertikales Polarisationsbild in einem der Bildaufnahmebereiche (62a-62d) aufgenommen wird und ein horizontales Polarisationsbild in einem anderen Bildaufnahmebereich (62a-62d) aufgenommen wird, und

wobei die Signalverarbeitungseinheit (8) dafür konfiguriert ist, ein Bild gemäß einem Polarisationsverhältnis von einem vertikalen Polarisationsbild zu einem horizontalen Polarisationsbild zu erzeugen, das in der Bildaufnahmeeinheit (6) aufgenommen wurde,

**dadurch gekennzeichnet, dass**:

die mehreren Linsen (21a-21d) der Linsenanordnung (2) mindestens vier Linsen (21a-21d) umfassen;

das Filter (4) mindestens vier Polarisationsbereiche (41a-41d) aufweist, die den mindestens vier Linsen (21a-21d) entsprechen; die Bildaufnahmeeinheit (6) mindestens vier Bildaufnahmebereiche (62a-62d) aufweist, die jeweils dafür konfiguriert sind, Lichtstrahlen zu empfangen, die durch jede der mindestens vier Linsen (21a-21d) geleitet wurden;

ein erstes Paar (21a, 21b) der mindestens vier Linsen (21a-21d) für große Entfernungen bestimmt ist und einen ersten Brennpunktabstand und einen ersten Bildwinkel aufweist, wobei die beiden Polarisationsbereiche (41a, 41b) dem ersten Paar von Linsen (21a, 21b) entsprechen, die Übertragungsachsen aufweisen, die senkrecht zueinander sind, so dass bei Gebrauch ein vertikales Polarisationsbild in einem der beiden Bildaufnahmebereiche (62a, 62b) aufgenommen wird, der dem ersten Paar Linsen (21a, 21b) entspricht, und ein horizontales Polarisationsbild in dem anderen der beiden Bildaufnahmebereiche (62a, 62b) aufgenommen wird, der dem ersten Paar Linsen (21a, 21b) entspricht;

ein zweites Paar (21c, 21d) der mindestens vier Linsen (21a-21d) für kleine Entfernungen bestimmt ist und einen zweiten Brennpunktabstand und einen zweiten Bildwinkel aufweist, wobei die beiden Polarisationsbereiche (41c, 41d) dem zweiten Paar von Linsen (21c, 21d) entsprechen, die Übertragungsachsen aufweisen, die senkrecht zueinander sind, so dass bei Gebrauch ein vertikales Polarisationsbild in einem der beiden Bildaufnahmebereiche (62c, 62d) aufgenommen wird, der dem zweiten Paar Linsen (21c, 21d) entspricht, und ein horizontales Polarisationsbild in dem anderen der beiden Bildaufnahmebereiche (62c, 62d) aufgenommen wird, der dem zweiten Paar Linsen (21c, 21d) entspricht;

der erste Brennpunktabstand länger ist als der zweite Brennpunktabstand und der erste Bildwinkel schmaler ist als der zweite Bildwinkel; und

wobei die Signalverarbeitungseinheit (8) dafür konfiguriert ist, ein Bild gemäß einem Polarisationsverhältnis von dem vertikalen Polarisationsbild zu dem horizontalen Polarisationsbild zu erzeugen, das in der Bildaufnahmeeinheit (6) mit dem ersten Paar Linsen (21a, 21b) für große Entfernungen aufgenommen wird, und ein Bild gemäß einem Polarisationsverhältnis von dem vertikalen Polarisationsbild zu dem horizontalen Polarisationsbild zu erzeugen, das in der Bildaufnahmeeinheit (6) mit dem zweiten Paar Linsen (21c, 21d) für kleine Entfernungen aufgenommen wird.

2. Bildaufnahmevorrichtung (100a, 100b) nach Anspruch 1, die ferner eine Lichtabschirmvorrichtung (3) umfasst, die so konfiguriert ist, dass sie Öffnungen (31a-31d) entsprechend den Lichtstrahlen aufweist, die durch die jeweiligen Linsen (21a-21d) der Linsenanordnung (2) geleitet wurden, um die Lichtstrahlen in die jeweiligen Polarisationsbereiche (41a-41d) des Filters (4) zu leiten.

3. Bildaufnahmevorrichtung (100a, 100b) nach Anspruch 1 oder 2, wobei die Signalverarbeitungseinheit (8) dafür ausgelegt ist, basierend auf einem Grad von mindestens einem der erzeugten Polarisationsverhältnisse zu bestimmen, ob eine Straße nass oder trocken ist.

4. Bildaufnahmevorrichtung (100a, 100b) nach einem der Ansprüche 1 bis 3, wobei die Signalverarbeitungseinheit (8) dafür ausgelegt ist, mit Hilfe eines vertikalen Polarisationsbildes, das in der Bildaufnahmeeinheit (16) aufgenommen wurde, zu bestimmen, was auf einer Straße geschrieben ist.

5. Bildaufnahmevorrichtung (100a, 100b) nach einem der Ansprüche 1 bis 4, wobei jeder Polarisationsbereich (41a-41d) des Filters (4) ein transparentes Substrat umfasst, auf dem eine Laminatstruktur aus mehreren Arten von transparenten Materialien mit unterschiedlichen Bruchindizes gebildet ist, und jede Schicht eine konkav-konvexe periodische Struktur mit einem eindimensionalen Zyklus aufweist, der in einer Richtung wiederholt wird.

6. Bildaufnahmevorrichtung (100a, 100b) nach einem der Ansprüche 1 bis 4, wobei jeder Polarisationsbereich (41a-41d) des Filters (4) U-förmig ist und aus einem Drahtgitter-Polarisator besteht, der eine periodische Struktur aufweist.

7. Bildaufnahmevorrichtung nach Anspruch 5 oder 6, wobei:

die Teilung der periodischen Struktur der Polarisationsbereiche (41a, 41b), die dem ersten Paar Linsen (21a, 21b) entspricht, kleiner ist als die Teilung der periodischen Struktur der Polarisationsbereiche (41c, 41d), die dem zweiten Paar Linsen (21c, 21 d) entspricht.

8. Verfahren zur Erfassung eines Straßenzustandes, das Folgendes umfasst:

Aufnehmen eines vertikalen Polarisationsbildes von Reflexionslicht von einer Straße mit einer Bildaufnahmevorrichtung (100a, 100b), die eine Linsenanordnung (2) umfasst, die ein Substrat umfasst, auf dem mehrere Linsen (21a-21d) bereitgestellt sind, und ein Filter (4), wobei das Filter (4) mindestens zwei Polarisationsbereiche (41a-41d) mit jeweiligen senkrechten Achsen umfasst, die nach Lichtstrahlen getrennt sind, die durch die jeweiligen Linsen (21a-21d) der Linsenanordnung (2) geleitet wurden, und eine Bildaufnahmeeinheit (6), die mehrere Bildaufnahmebereiche (61a-61d) umfasst, die dafür konfiguriert sind, Bilder eines Objekts aufzunehmen, indem sie die Lichtstrahlen empfangen, die jeden Bereich des Filters (4) in einem der mehreren Bildaufnahmebereiche (61a-61d) übertragen haben;
Aufnehmen eines horizontalen Polarisationsbildes des Reflexionslichts von der Straße wobei sich die Bildaufnahmevorrichtung (100a, 100b) in einem anderen der mehreren Bildaufnahmebereiche (61a-61d) befindet; und
Erfassen des Straßenzustands ausgehend von einem Polarisationsverhältnis von dem vertikalen Polarisationsbild zu dem horizontalen Polarisationsbild, das in der Bildaufnahmeeinheit (6) aufgenommen wurde, **dadurch gekennzeichnet, dass**:

die mehreren Linsen (21a-21d) der Linsenanordnung (2) mindestens vier Linsen (21a-21d) umfassen;
das Filter (4) mindestens vier Polarisationsbereiche (41a-41d) aufweist, die den mindestens vier Linsen (21a-21d) entsprechen;
die Bildaufnahmeeinheit (6) mindestens vier Bildaufnahmebereiche (62a-62d) aufweist, die jeweils dafür konfiguriert sind, Lichtstrahlen zu empfangen, die durch jede der mindestens vier Linsen (21a-21d) geleitet wurden;
ein erstes Paar (21 a, 21b) der mindestens vier Linsen (21 a-21 d) für große Entfernungen bestimmt ist und einen ersten Brennpunktabstand und einen ersten Bildwinkel aufweist, wobei die beiden Polarisationsbereiche (41a, 41b) dem ersten Paar von Linsen (21a, 21b) entsprechen, die Übertragungsachsen aufweisen, die senkrecht zueinander sind, so dass bei Gebrauch ein vertikales Polarisationsbild in einem der beiden Bildaufnahmebereiche (62a, 62b) aufgenommen wird, der dem ersten Paar Linsen (21a, 21b) entspricht, und ein horizontales Polarisationsbild in dem anderen der beiden Bildaufnahmebereiche (62a, 62b) aufgenommen wird, der dem ersten Paar Linsen (21a, 21b) entspricht;
ein zweites Paar (21c, 21 d) der mindestens vier Linsen (21a-21d) für kleine Entfernungen bestimmt ist und einen zweiten Brennpunktabstand und einen zweiten Bildwinkel aufweist, wobei die beiden Polarisationsbereiche (41 c, 41 d) dem zweiten Paar von Linsen (21c, 21 d) entsprechen, die Übertragungsachsen aufweisen, die senkrecht zueinander sind, so dass bei Gebrauch ein vertikales Polarisationsbild in einem der beiden Bildaufnahmebereiche (62c, 62d) aufgenommen wird, der dem zweiten Paar Linsen (21c, 21 d) entspricht, und ein horizontales Polarisationsbild in dem anderen der beiden Bildaufnahmebereiche (62c, 62d) aufgenommen wird, der dem zweiten Paar Linsen (21c, 21d) entspricht;
der erste Brennpunktabstand länger ist als der zweite Brennpunktabstand und der erste Bildwinkel schmaler ist als der zweite Bildwinkel; und
wobei das Verfahren ferner Folgendes umfasst:

Erzeugen eines Bildes gemäß einem Polarisationsverhältnis von dem vertikalen Polarisationsbild zu dem horizontalen Polarisationsbild, das in der Bildaufnahmeeinheit (6) mit dem ersten Paar Linsen (21a, 21b) für große Entfernungen aufgenommen wird, und eines Bildes gemäß einem Polarisationsverhältnis von dem vertikalen Polarisationsbild zu dem horizontalen Polarisationsbild, das in der Bildaufnahmeeinheit (6) mit dem zweiten Paar Linsen (21 c, 21 d) für kleine Entfernungen aufgenommen wird.

9. Fahrzeug, in dem eine Bildaufnahmevorrichtung nach einem der Ansprüche 1 bis 7 installiert ist.

## Revendications

1. Dispositif de prise de vue (100a, 100b) comprenant :

   un réseau de lentilles (2) comprenant un substrat sur lequel sont prévues de multiples lentilles (21a à 21d) ;
   un filtre (4) comprenant au moins deux zones de polariseur (41 a à 41d) avec des axes perpendiculaires respectifs qui sont séparés selon des faisceaux de lumière qui sont passés à travers les lentilles (21a à à 21d) respectives du réseau de lentilles (2) ;
   une unité de prise de vue (6) comprenant de multiples zones de prise de vue (62a à 62d) configurées pour capturer des images d'un objet en recevant les faisceaux de lumière qui sont passés à travers les zones de polariseur (41a à 41d) correspondantes respectives du filtre (4) ;
   une unité de traitement de signal (8) configurée pour traiter des signaux d'image des images de l'objet capturées dans les multiples zones de prise de vue (62a à 62d) de l'unité de prise de vue (6),
   le dispositif de prise de vue (100a, 100b) étant configuré de telle sorte qu'en utilisation, une image de polarisation verticale soit capturée au niveau de l'une des zones de prise de vue (62a à 62d) et qu'une image de polarisation horizontale soit capturée au niveau d'une autre zone de prise de vue (62a à 62d), et
   l'unité de traitement de signal (8) étant configurée pour produire une image selon un rapport de polarisation entre une image de polarisation verticale et une image de polarisation horizontale capturées dans l'unité de prise de vue (6),
   **caractérisé en ce que** :

   les multiple lentilles (21a à 21d) du réseau de lentilles (2) comprennent au moins quatre lentilles (21a à 21d) ;
   le filtre (4) présente au moins quatre zones de polariseur (41a à 41d) correspondant aux au moins quatre lentilles (21 a à 21d) ;
   l'unité de prise de vue (6) possède au moins quatre zones de prise de vue (62a à 62d) configurées respectivement pour recevoir des faisceaux de lumière qui sont passés à travers chacune des au moins quatre lentilles (21 a à 21d) ;
   une première paire (21 a, 21b) des au moins quatre lentilles (21 a à 21d) est destinée à la longue distance, avec une première distance de point focal et un premier angle d'image, les deux zones de polariseur (41a, 41b) correspondant à la première paire de lentilles (21a, 21b) ayant des axes de transmission qui sont perpendiculaires l'un à l'autre de sorte qu'en utilisation, une image de polarisation verticales soit capturée au niveau de l'une des deux zones de prise de vue (62a, 62b) correspondant à la première paire de lentilles (21a, 21b) et qu'une image de polarisation horizontale soit capturée au niveau de l'autre des deux zones de prise de vue (62a, 62b) correspondant à la première paire de lentilles (21a, 21b) ;
   une seconde paire (21c, 21d) des au moins quatre lentilles (21a-21d) est destinée à la courte distance, avec une seconde distance de point focal et un second angle d'image, les deux zones de polariseur (41 c, 41 d) correspondant à la seconde paire de lentilles (21 c, 21 d) ayant des axes de transmission qui sont perpendiculaires l'un à l'autre de telle sorte qu'en utilisation, une image de polarisation verticale soit capturée au niveau d'une des deux zones de prise de vue (62c, 62d) correspondant à la seconde paire de lentilles (21c, 21d) et qu'une image de polarisation horizontale soit capturée au niveau de l'autre des deux zones de prise de vue (62c, 62d) correspondant à la seconde paire de lentilles (21 c, 21 d) ;
   la première distance de point focal est plus longue que la seconde distance de point focal et le premier angle d'image est plus étroit que le second angle d'image ; et
   l'unité de traitement de signal (8) est configurée pour produire une image selon un rapport de polarisation entre l'image de polarisation verticale et l'image de polarisation horizontale capturées dans l'unité de prise de vue (6) par le biais de la première paire de lentilles (21a, 21b) pour longue distance et une image selon un rapport de polarisation entre l'image de polarisation verticale et l'image de polarisation horizontale capturées dans l'unité de prise de vue (6) par le biais de la seconde paire de lentilles (21 c, 21 d) pour courte distance.

2. Dispositif de prise de vue (100a, 100b) selon la revendication 1, comprenant en outre un dispositif d'écran de protection contre la lumière (3) configuré pour avoir des ouvertures (31 a à 31d) selon les faisceaux de lumière qui ont traversé les lentilles respectives (21a à 21d) du réseau de lentilles (2) pour faire entrer les faisceaux de lumière dans les zones de polariseur (41a a à 41d) respectives du filtre (4).

3. Dispositif de prise de vue (100a, 100b) selon la revendication 1 ou 2, dans lequel l'unité de traitement de signal (8) est agencée pour déterminer si une route est mouillée ou sèche sur la base d'un degré d'au moins un des rapports de polarisation produits.

**4.** Dispositif de prise de vue (100a, 100b) selon l'une quelconque des revendications 1 à 3, dans lequel l'unité de traitement de signal (8) est agencée pour déterminer ce qui est écrit sur une route à l'aide d'une image de polarisation verticale capturée dans l'unité de prise de vue (16).

**5.** Dispositif de prise de vue (100a, 100b) selon l'une quelconque des revendications 1 à 4, dans lequel chaque zone de polariseur (41 a à 41d) du filtre (4) comprend un substrat transparent sur lequel une structure stratifiée est formée de multiples types de matériaux transparents ayant des indices de réfraction différents et chaque couche possède une structure concavo-convexe périodique ayant un cycle unidimensionnel répété dans une direction.

**6.** Dispositif de prise de vue (100a, 100b) selon l'une quelconque des revendications 1 à 4, dans lequel chaque zone de polariseur (41 a à 41d) du filtre (4) est formée d'un polariseur de type à grille métallique possédant une structure périodique.

**7.** Dispositif de prise de vue selon la revendication 5 ou 6, dans lequel :

le pas de la structure périodique des zones de polariseur (41a, 41b) correspondant à la première paire de lentilles (21a, 21b) est plus petit que le pas de la structure périodique des zones de polariseur (41 c, 41 d) correspondant à la seconde paire de lentilles (21c, 21 d).

**8.** Procédé de détection d'un état de route comprenant :

la capture d'une image de polarisation verticale de lumière de réflexion provenant d'une route avec un dispositif de prise de vue (100a, 100b) comprenant un réseau de lentilles (2) comprenant un substrat sur lequel sont prévues de multiples lentilles (21a à 21d), et un filtre (4), le filtre (4) comprenant au moins deux zones de polariseur (41a à 41d) avec des axes perpendiculaires respectifs qui sont séparés selon des faisceaux de lumière qui sont passés à travers les lentilles (21a à 21d) respectives du réseau de lentilles (2) et une unité de prise de vue (6) comprenant de multiples zones de prise de vue (61a à 61d) configurées pour capturer des images d'un objet en recevant les faisceaux de lumière qui ont transmis chaque zone du filtre (4), dans une des multiples zones de prise de vue (61a à 61d) ;
la capture d'une image de polarisation horizontale de la lumière de réflexion provenant d'une route avec le dispositif de prise de vue (100a, 100b) dans une autre des zones de prise de vue (61a à 61d) ; et
la détection de l'état de route à partir d'un rapport de polarisation entre l'image de polarisation verticale et l'image de polarisation horizontale capturées dans l'unité de prise de vue (6), **caractérisé en ce que** :

les multiples lentilles (21a à 21d) du réseau de lentilles (2) comprennent au moins quatre lentilles (21a à 21d) ;
le filtre (4) présente au moins quatre zones de polariseur (41a à 41d) correspondant aux au moins quatre lentilles (21a a 21d) ;
l'unité de prise de vue (6) possède au moins quatre zones de prise de vue (62a à 62d) configurées respectivement pour recevoir des faisceaux de lumière qui sont passés à travers chacune des au moins quatre lentilles (21a à 21d) ;
une première paire (21 a, 21b) des au moins quatre lentilles (21a à 21d) est destinée à la longue distance, avec une première distance de point focal et un premier angle d'image, les deux zones de polariseur (41a, 41b) correspondant à la première paire de lentilles (21a, 21b) ayant des axes de transmission qui sont perpendiculaires l'un à l'autre de sorte qu'en utilisation, une image de polarisation verticale soit capturée au niveau de l'une des deux zones de prise de vue (62a, 62b) correspondant à la première paire de lentilles (21a, 21b) et qu'une image de polarisation horizontale soit capturée au niveau de l'autre des deux zones de prise de vue (62a, 62b) correspondant à la première paire de lentilles (21a, 21b) ;
une seconde paire (21c, 21d) des au moins quatre lentilles (21a-21d) est destinée à la courte distance, avec une seconde distance de point focal et un second angle d'image, les deux zones de polariseur (41c, 41 d) correspondant à la seconde paire de lentilles (21c, 21 d) ayant des axes de transmission qui sont perpendiculaires l'un à l'autre de telle sorte qu'en utilisation, une image de polarisation verticale soit capturée au niveau d'une des deux zones de prise de vue (62c, 62d) correspondant à la seconde paire de lentilles (21c, 21d) et qu'une image de polarisation horizontale soit capturée au niveau de l'autre des deux zones de prise de vue (62c, 62d) correspondant à la seconde paire de lentilles (21c, 21 d) ;
la première distance de point focal est plus longue que la seconde distance de point focal et le premier angle d'image est plus étroit que le second angle d'image ; et
le procédé comprend en outre :

la production d'une image selon un rapport de polarisation entre l'image de polarisation verticale et l'image de polarisation horizontale capturées dans l'unité de prise de vue (6) par le biais de la première paire de lentilles (21a, 21b) pour longue distance et d'une image selon un rapport de polarisation entre l'image de polarisation verticale et l'image de polarisation horizontale capturées dans l'unité de prise de vue (6) par le biais de la seconde paire de lentilles (21c, 21 d) pour courte distance.

9. Véhicule dans lequel est installé un dispositif de prise de vue selon l'une quelconque des revendications 1 à 7.

# FIG. 1

# FIG. 2

# FIG. 3

```
┌─────────────────┐           ┌─────────────────┐      SIGNAL
│  SOLID IMAGE    │~62a       │  SOLID IMAGE    │~62b  PROCESSING
│ PICKUP ELEMENT  │           │ PICKUP ELEMENT  │      UNIT 8
└─────────────────┘           └─────────────────┘
         │                             │
┌─────────────────┐           ┌─────────────────┐
│    SIGNAL       │~81a       │    SIGNAL       │~81b
│ PRE-PROCESSING  │           │ PRE-PROCESSING  │
│     UNIT        │           │     UNIT        │
└─────────────────┘           └─────────────────┘
         │                             │
┌─────────────────┐           ┌─────────────────┐
│  IMAGE MEMORY   │~82a       │  IMAGE MEMORY   │~82b
└─────────────────┘           └─────────────────┘

  83                           86              85
┌──────────────┐      ┌──────────────┐   ┌──────────────┐
│ PROCESSING   │      │ ROAD STATUS  │   │ ROAD STATUS  │
│    UNIT      │      │ RECOGNITION  │◄─►│ MEMORY UNIT  │
└──────────────┘      │    UNIT      │   └──────────────┘
       │              └──────────────┘
┌──────────────┐
│ ROAD STATUS  │~84
│ DETECTION    │
│    UNIT      │
└──────────────┘

         ┌──────────────┐
         │ OUTPUT UNIT  │~87
         └──────────────┘
```

# FIG. 4A

REFLOW METHOD

# FIG. 4B

ION DIFFUSION METHOD

# FIG. 4C

INKJET METHOD

# FIG. 4D

GRAY SCALE METHOD

# FIG. 5

41a (41b)

412

413

411

Z  Y

X

# FIG. 6A

41a

41b

# FIG. 6B

41a  41b

411

Z  Y

X

# FIG. 7A

312  32

311

# FIG. 7B

313

311

# FIG. 7C

31a  32  31b

3

311  313

# FIG. 8

→ HORIZONTAL POLARIZATION COMPONENT (Is)

--→ VERTICAL POLARIZATION COMPONENT (Ip)

(a) WET                    (b) DRY

FIG. 9

POLARIZATION RATIO COMPONENT

VERTICAL POLARIZATION COMPONENT Rs

HORIZONTAL POLARIZATION COMPONENT Rp

REFLECTION RATIO

0.5

0

0   50  53.1   90

INCIDENT ANGLE [°]

POLARIZATION RATIO

100

0

FIG. 10

FIG. 11A

FIG. 11B

# FIG. 12

# FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0558927 A1
- JP 55156841 A
- JP 58158540 A
- US 5557261 A
- JP 2008158594 A